# EUROPEAN PATENT APPLICATION

(11) **EP 1 655 397 A1**
(43) Date of publication of application: **10.05.2006**
(21) Application number: 05077521.2
(22) Date of filing: 03.11.2005
(51) Int. Cl.: D03D 47/27, F16H 55/08, F16H 55/06

(54) **Driving gearwheel for driving a gripper rod in a weaving machine**

(30) Priority: 04.11.2004 BE 200400539
(71) Applicant: NV Michel van de Wiele, 8510 Kortrijk/Marke (BE)
(72) Inventor: Debaes, Johny, 8890 Moorslede (BE)
(74) Representative: Ostyn, Frans

(57) **Abstract**

This invention is related to a driving gearwheel (1) for driving a rapier rod (2) of a weaving machine, whereby cooperation of rapier rod (2) with driving gearwheel (1) is subject to less hindrance and damage due to occurring impact load at higher operating speeds and/or larger weaving widths, in that the tooth thickness (Td) of at least one tooth (3) of the driving gearwheel (1) varies in crosswise-direction (Tb) of the tooth (3), and whereby this tooth thickness (Td) is larger in the middle area (5) than in the edge regions (7).

## Description

The invention relates to a driving gearwheel for driving a rapier rod of a weaving machine, comprising a set of teeth, which are disposed in such a way that they engage the tooth profile of a cooperating rapier rod on the one hand, and to a rapier device for a weaving machine, comprising a rapier rod driven by a driving gearwheel according to the invention on the other hand.

This patent application relates furthermore to a rapier weaving machine fitted with one or more rapier devices according to the invention.

In a rapier weaving machine, the rapiers, that carry the weft yam through the shed from one side of the weaving machine to the other side of the weaving machine, are each of them at their end connected to a rapier rod. For performing the to and fro motion, this rapier rod is guided in a guiding device. For driving this to and fro motion, the rapier rod is provided with a tooth profile, which engages a driving gearwheel fitted at the vertical axis. The tooth profile is preferably achieved in providing rectangular openings or recesses in the rapier rod.

Given the tendency to construct and use more and more rapidly operating rapier weaving machines and machines with an increased weaving width, velocity at which the rapier rod has to move through the shed also increases. Moreover, at one end of its motion, the rapier has to pick up or release the weft yam and at the other end of its motion it has to pass or take over the weft yam. At these ends, the rapier always comes to a standstill and next it takes its full motion speed again in the other direction.

Considerable impact forces occur during this reverse of motion, and these forces strongly increase with accelerating operating speed of the weaving machine and with accelerating motion speed of the rapier rod. These impact forces also affect the area where the teeth of the rapier rod and the teeth of the cooperating gearwheel interact with each other.

With the present state of technique, this force is limited or absorbed in using either materials that are lighter in weight, or materials that are stronger or materials that combine both features for the rapier rod, for the drive gearwheel or for both. In this way the German patent publication DE 3527202 provides for a rapier rod that is made out of synthetic material in order to limit force by reducing inertia.
Rigidity of synthetic materials, however, is much lower, which makes that the cooperation with the gearwheel (mostly made out of steel or aluminium) will lead to it that the synthetic teeth in the rapier rod deform.

This deformation causes Hertzian stresses between gearwheel and rapier rod, which reach peaks in the edge region of the tooth width at the outer side of the teeth of the gearwheel. This phenomenon has two drawbacks: on the one hand because the higher stress is locally considerably increased compared to when an even spread of the Hertzian stress would be achieved, due to which overload may occur locally; on the other hand this increased load occurs near the roundings in the teeth of the rapier rod, which in its turn is harmful because of a higher risk of notch effect in this area.

Because of the limitations in rigidity of the plastic rapier rod, the German patent publication DE 3638673 provides an embodiment of the rapier rod, in which the plastic is reinforced by using reinforcing materials in the plastic such as for instance: glass fibres, carbon fibres or armid fibres. These rapier rods, however, are difficult to manufacture and expensive.

It is the object of the invention to manufacture in a simple way and at an acceptable cost price a driving gearwheel for driving a rapier rod of a weaving machine, in which the cooperation of the rapier rod with the driving gearwheel is subject to less hindrance and damage due to occurring impact load at increased operating speeds and/or larger weaving widths.

The objective of the invention is achieved by providing a driving gearwheel for driving a rapier rod of a weaving machine, comprising a set of teeth that are disposed to engage a tooth profile of a cooperating rapier rod, in which tooth thickness of at least one tooth of the driving gearwheel varies according to the crosswise-direction of the tooth and in which this tooth thickness is larger in the middle region than it is at the edge region.

In this patent application "according to the crosswise-direction" should be understood as the direction transversely to the contour line (centre line) of the gearwheel.

In adapting the form of the teeth of the driving gearwheel and in this way shape a preferably crowned teeth profile, a reduced impact load between rapier rod and driving gearwheel is achieved.

In a more particular embodiment of the driving gear wheel according to the invention, tooth thickness progressively reduces from the middle area on. In slightly reducing the tooth thickness of a number of teeth in crosswise-direction of the gearwheel from the middle of the tooth width towards the end (edge region) of the tooth width, stress would theoretically be concentrated in the middle of the teeth, which would also mean a harmful load. Now it has been shown that due to the deformation of the less rigid tooth openings in the rapier rod, these deformed tooth openings in the rapier rod fit the crowned tooth profile of the tooth of the cooperating driving gear wheel, which in this way leads to a redistribution of Hertzian pressure, eliminating or reducing peak loads at the teeth ends without overloading the tooth opening in the middle of the tooth width.

In this way the Hertzian stresses that occur in the contact area between teeth openings of the rapier rod and at least one tooth of the cooperating driving gearwheel are redistributed over the width of the tooth and the tooth opening in such a way that stresses at the ends of the tooth (in crosswise-direction) reduce and the distribution of stress over the contact area between rapier rod and driving gearwheel becomes more evenly. In consequence occurring peak loads reduce on the one hand and peak load is shifted from the end of the tooth width (edge region) to the middle of the tooth width on the other hand. As a consequence peak load is situated in a less vulnerable area, further away from the roundings in the tooth openings of the rapier rod, which are risk areas for formation of notch effect.

In a preferential embodiment of the driving gearwheel according to the invention, the named tooth (3) is shaped as an involute. Consequently a driving gearwheel with involute profiled teeth is obtained.

In a preferred embodiment of the driving gearwheel according to the invention, the form of at least one of the tooth flanks of a tooth is shaped as a circular arc.

In another embodiment of the driving gearwheel according to the invention, the form of at least one of the tooth flanks of a tooth is shaped according to a logarithmic curve. A tooth form shaped according to a logarithmic curve differs from a tooth form shaped according to a circular arc in that the tooth form according to a logarithmic curve has a smaller tooth thickness difference in the middle area, whereas the tooth thickness difference in the edge regions according to the logarithmic curve is larger than for a tooth form according to a circular arc. This has as an advantage that in case of a tooth form according to a logarithmic curve the increase of the air gap between the tooth of the driving gearwheel and the tooth opening in the rapier rod free of load starting from the middle of the tooth towards the edge firstly increases slower than in case of the embodiment according to a circular arc and towards the edge of the tooth width increases much faster than in case of an embodiment according to a circular arc.

This preferred embodiment allows a reduction of occurring stresses on the outer side without having to considerably increase stress in the middle of the teeth.

In a most particular embodiment of the driving gearwheel according to the invention, the difference between tooth thickness in the middle area and tooth thickness in the edge regions is situated between 1 and 20 % of the tooth width.

In a particularly advantageous embodiment of the driving gearwheel according to the invention, the tooth form of at least one tooth of the driving gearwheel symmetrically covers both sides of the middle area.
Another subject matter of this patent application relates to a rapier device for a weaving machine, comprising a rapier rod driven by a driving gearwheel, in which it concerns a driving gearwheel according to one of the claims 1 up to and including 7.

Furthermore, this patent application relates to a rapier weaving machine, which is fitted with one or more rapier devices according to claim 8.

In order to further explain the characteristics of this invention and to indicate additional advantages and details, a more detailed description of the equipment according to the invention follows. Let it be clear that nothing in the following description may be interpreted as a limitation of the protection as demanded in the claims for this invention.

In this description reference is made to the accompanying drawings using reference numbers, and wherein:
- *figure 1 shows a cross-section of the engagement of a number of teeth of the driving gearwheel in the tooth profile of the cooperating rapier rod, according to the state of technique, without width crowning with indication of the spread of Hertzian pressure;*
- *figure 2 shows a cross-section of the engagement of a number of teeth of the driving gearwheel in the tooth profile of the cooperating rapier rod, with application of width crowning of the tooth according to the invention, with indication of the spread of Hertzian pressure;*

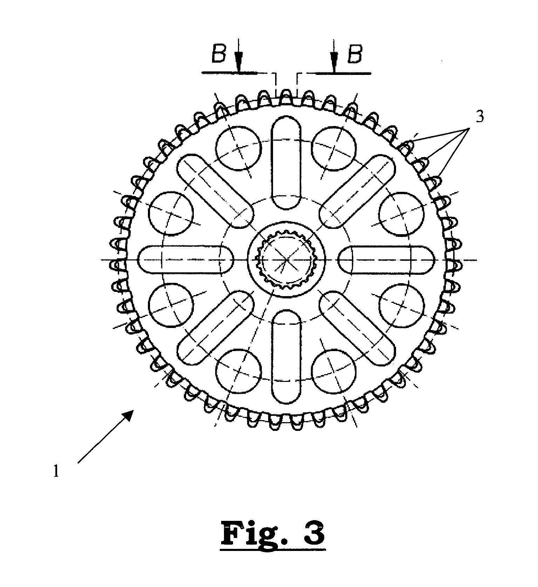

- *figure 3 shows a front view of the driving gearwheel according to the invention;*
- *figure 4 shows a cross-section B-B of one tooth from the driving gearwheel according to figure 3;*

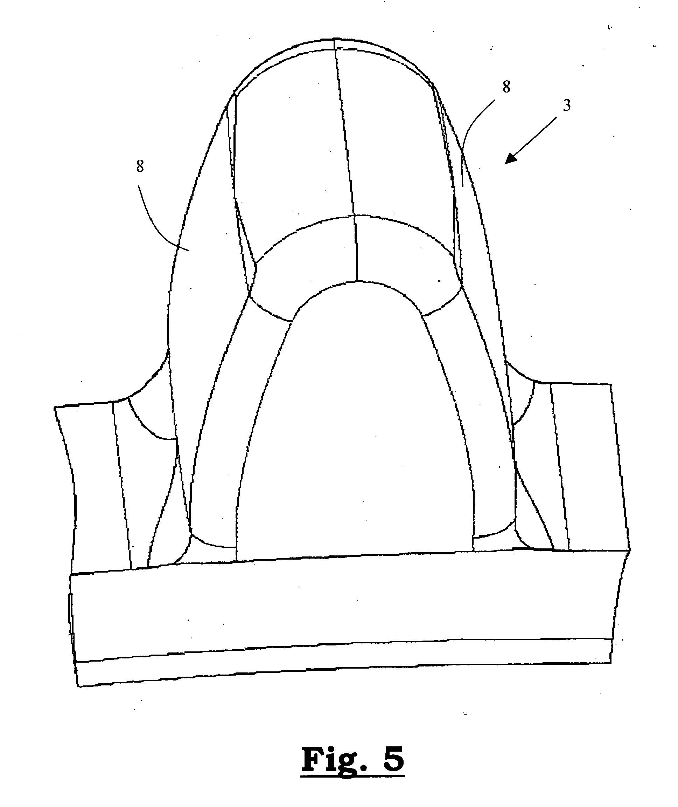

- *figure 5 shows a perspective view of one tooth of a driving gearwheel according to the invention.*

This invention relates a.o. to a driving gearwheel (1) for driving a rapier rod (2) of a weaving machine, comprising a set of teeth (3), which are disposed in such a way that they engage a tooth profile (4) of a cooperating rapier rod (2), whereby the tooth thickness (Td) of at least one tooth (3) of the driving gearwheel (1) varies according to the crosswise-direction (Tb) of the tooth (3), and in which this tooth thickness (Td) is larger in the middle area (5) than at the edge regions (7) in order to achieve in this way a redistribution of Hertzian pressure, reducing or eliminating the peak load in the edge regions of the tooth (3). The crosswise-direction is the direction transversely to the contour line (centre line (6)) of the gearwheel (1).

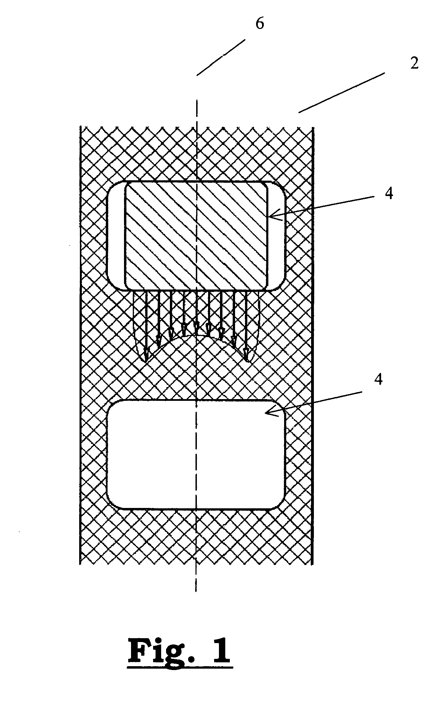

The fact is that for driving gearwheels according to the state of technique with involute profiled teeth, acting Hertzian forces (see figure 1), that occur at the contact between the opening provided in the rapier rod and the tooth of the cooperating driving gearwheel, increase toward the edges of the involute teeth. At the edges of these teeth, stresses may be up to more than 40 % higher than in the middle of the tooth.

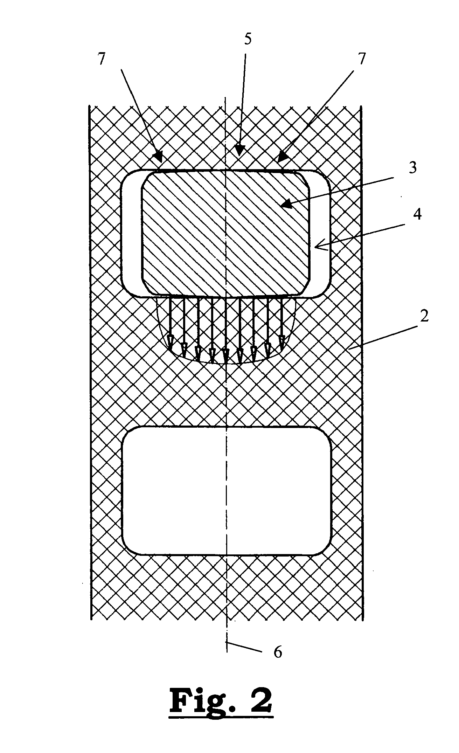

In crowning the teeth (3) of the cooperating driving gearwheel (1) represented in figure 1 in crosswise-direction of the tooth (3), this means that tooth thickness progressively decreases from the contour line or centre line (6) of the gearwheel (1), Hertzian stresses will be redistributed, as represented in figure 2, over the width of the teeth (3) in such a way that stresses at the ends of the tooth, in edge regions (7), reduce and through which distribution of stress over the engagement plane becomes more evenly. Consequently occurring peak loads reduce on the one hand, and peak load is shifted from the end of the tooth width to the middle of the tooth width on the other hand. As represented in figure 2, peak load is now situated in a less vulnerable area, further away of the roundings in the rapier rod, so that the risk of notch effect is considerably reduced.
The difference between tooth thickness in de middle area (Tdm) and tooth thickness in the edge regions (Tdr) is situated between 1 and 20 % of the tooth width (Tb). In this way, thickness of a tooth with a maximum tooth width of 8 mm may vary to over 1.6 mm.

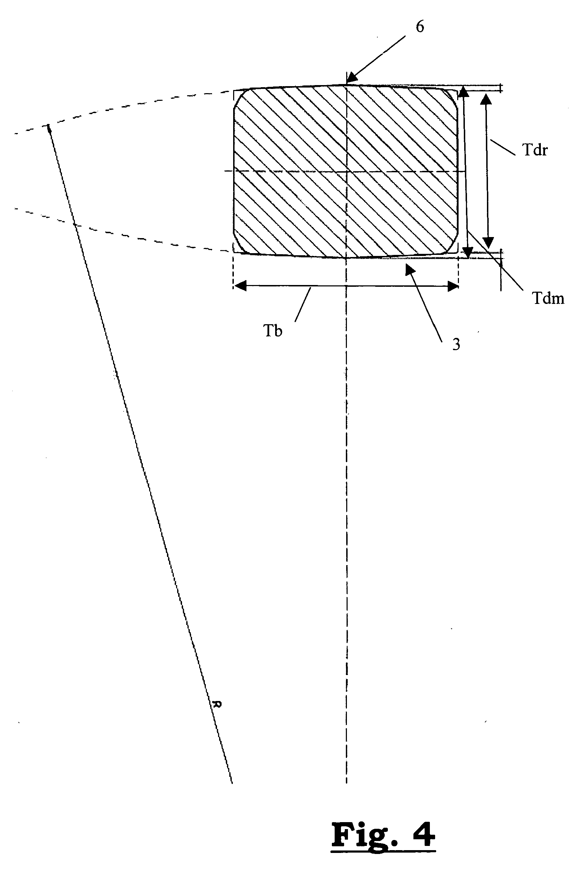

As represented in figure 4, tooth thickness may decrease either according to a circular arc, through which the tooth form in tooth width develops according to a circular arc with radius R.
Or tooth thickness decreases logarithmically.

## Claims

1. Driving gearwheel (1) for driving a rapier rod (2) of a weaving machine, comprising a set of teeth (3), which are disposed in such a way that they engage a tooth profile (4) of a cooperating rapier rod (2), **characterised in that** the tooth thickness (Td) of at least one tooth (3) of the driving gearwheel (1) varies according to the crosswise-direction (Tb) of the tooth (3), and **in that** this tooth thickness (Td) is larger in the middle area (5) than at the edge regions (7).

2. Driving gearwheel (1) according to claim 1, **characterised in that** said tooth (3) is shaped as an involute.

3. Driving gearwheel (1) according to claim 1 or 2, **characterised in that** tooth thickness progressively decreases from the middle area (5) on.

4. Driving gearwheel (1) according to one of foregoing claims, **characterised in that** the form of at least one of the tooth flanks (8) of a tooth (3) is shaped as a circular arc.

5. Driving gearwheel (1) according to one of foregoing claims 1 up to 3, **characterised in that** the form of at least one of the tooth flanks (8) of a tooth (3) is shaped according to a logarithmic curve.

6. Driving gearwheel (1) according to one of the foregoing claims, **characterised in that** the difference between tooth thickness in the middle area (Tdm) and tooth thickness in the edge regions (Tdr) is situated between 1 and 20 % of the tooth width (Tb).

7. Driving gearwheel (1) according to one of foregoing claims, **characterised in that** the tooth form of at least one tooth (3) of the driving gearwheel (1) symmetrically covers both sides of the middle area (5).

8. Rapier device for a weaving machine, comprising a rapier rod (2) driven by a driving gearwheel (1), **characterised in that** it concerns a driving gearwheel (1) in the embodiment of one of the claims 1 up to 7 incl..

9. Rapier weaving machine, **characterised in that** the said rapier weaving machine is fitted with one or more rapier devices according to claim 8.
